# EUROPEAN PATENT APPLICATION

(11) **EP 4 621 662 A1**
(43) Date of publication of application: **24.09.2025**
(21) Application number: 24222237.0
(22) Date of filing: 20.12.2024
(51) Int. Cl.: G06N 10/20, G06N 10/60

(54) **SIMULATION PROGRAM, INFORMATION PROCESSING DEVICE, AND SIMULATION METHOD**

(30) Priority: 19.03.2024 JP 2024044033
(71) Applicant: FUJITSU LIMITED, Kawasaki-shi, Kanagawa 211-8588 (JP)
(72) Inventor: SONEDA, Hiromitsu, Kawasaki-shi, Kanagawa, 211-8588 (JP); KIMURA, Yusuke, Kawasaki-shi, Kanagawa, 211-8588 (JP)
(74) Representative: Hoffmann Eitle

(57) **Abstract**

A simulation program for causing a computer to execute: performing, in order from a gate in a first direction among gates in a first quantum circuit, a merging of each gate in the first direction to store first matrices obtained by the merging in the first direction; performing, in order from a gate in a second direction among the gates, a merging of each gate in the second direction to store second matrices obtained by the merging in the second direction; and performing simulation of a second quantum circuit by using the first or second matrices, for a second gate that is a gate in the second quantum circuit, has no difference from the first quantum circuit, and is arranged in the first or second direction than a first gate that is a gate in the second quantum circuit and has a difference from the first quantum circuit.

## Description

### FIELD

The embodiment discussed herein is related to a simulation program or the like.

### BACKGROUND

In recent years, for research and development of an algorithm executed by a quantum computer, it has been important to simulate calculation of a quantum circuit on a classical computer at high speed. A quantum circuit simulator inputs information regarding the quantum circuit and calculates and outputs a final quantum state or a measurement result.

As a type of the quantum circuit simulator, for example, an explicit State Vector (SV) based, a Decision Diagram (DD) based, or the like is exemplified. The explicit State Vector based one is the most typical simulator and holds a matrix and a vector as numerical values explicitly. The DD based can reduce a memory amount, by holding a matrix and a vector as a graph structure. Furthermore, the DD-based one can integrate a plurality of quantum gates (matrix) into a single matrix with relatively small amount of memory.

Here, typically, if a type of the quantum gate or a parameter of the quantum gate in the quantum circuit changes even slightly, the quantum circuit simulator performs all the calculations of the quantum circuit again from the beginning. If the type of the quantum gate or the parameter of the quantum gate in the quantum circuit changes even slightly, even the DD-based quantum circuit simulator needs to perform all the calculations again from the beginning.

Japanese National Publication of International Patent Application No. 2020-515999, Japanese Laid-open Patent Publication No. 2022-191443, U.S. Patent Application Publication No. 2019/0332731, and U.S. Patent Application Publication No. 2021/0192114 are disclosed as related art.

### SUMMARY

### TECHNICAL PROBLEM

However, if the type of the quantum gate or the parameter of the quantum gate in the quantum circuit changes, the typical DD-based quantum circuit simulator needs to perform all the calculations of the quantum circuit again from the beginning. Therefore, there is a problem in that a total time of simulation increases.

Note that the above problem is a problem for not only the DD-based quantum circuit simulator but also typical quantum circuit simulators that can calculate a matrix-matrix product or a product of matrices.

In one aspect, an object of the embodiment is to accelerate simulation of a quantum circuit simulator that can calculate a product of matrices.

### SOLUTION TO PROBLEM

According to an aspect of the embodiments, there is provided a simulation program of simulating a quantum circuit by using a simulator that is capable of calculating a product of matrices, the simulation program including instructions which, when executed by a computer, cause the computer to execute processing including: performing, in order from a gate in a first direction among a plurality of gates included in a first quantum circuit, for each gate of the plurality of gates, a merging of the each gate in the first direction, and to store a plurality of first matrices obtained by the merging in the first direction; performing, in order from a gate in a second direction among the plurality of gates, for each gate of the plurality of gates, a merging of the each gate in the second direction, and to store a plurality of second matrices obtained by the merging in the second direction; and performing simulation of a second quantum circuit by using the plurality of first or second matrices, for a second gate that is a gate among multiple gates included in the second quantum circuit, has no difference from the first quantum circuit, and is arranged in the first or second direction than a first gate that is a gate in the second quantum circuit and has a difference from the first quantum circuit.

### ADVANTAGEOUS EFFECTS OF INVENTION

According to one embodiment, it is possible to reduce a simulation time of a DD-based quantum circuit simulator.

### BRIEF DESCRIPTION OF DRAWINGS

FIG. 1 is a diagram illustrating an operation principle of simulation processing according to an embodiment;
FIG. 2 is a diagram illustrating an example of a functional configuration of an information processing device according to the embodiment;
FIG. 3 is a diagram illustrating an example of comparison according to the embodiment;
FIG. 4A is a diagram (1) illustrating an example of merging according to the embodiment;
FIG. 4B is a diagram (2) illustrating an example of the merging according to the embodiment;
FIG. 5 is a diagram illustrating an example of reuse calculation according to the embodiment;
FIG. 6 is a diagram illustrating an example of use of a merging result;
FIG. 7 (i.e., FIGs. 7A and 7B) is a diagram illustrating an example of a flowchart of the simulation processing according to the embodiment;
FIG. 8 is a diagram illustrating an example of a computer that executes a simulation program; and
FIG. 9 is a diagram illustrating a reference example of a quantum circuit.

### DESCRIPTION OF EMBODIMENTS

Hereinafter, an embodiment of a simulation program, an information processing device, and a simulation method disclosed in the present application will be described in detail with reference to the drawings. Note that the present invention is not limited by the embodiment.

First, a quantum circuit simulated by a quantum circuit simulator will be described.

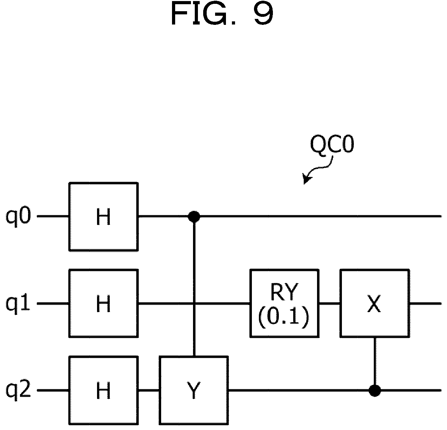

FIG. 9 is a diagram illustrating a reference example of the quantum circuit. As illustrated in FIG. 9, a quantum circuit QC0 is illustrated as an example of the quantum circuit. The quantum circuit QC0 is a quantum arithmetic model described by a combination of quantum gates. The horizontal line indicates a qubit (Qubit: quantum bit). The qubit is a minimum unit of quantum information and has a quantum state represented by a complex vector. Here, "q0", "q1", and "q2" are the qubits.

The quantum gate is a gate that acts on the qubit and manipulates the quantum state of the qubit(s). Here, "H", "Y", "X", and "RY" are the quantum gates. As an example, "H" is a single qubit gate that controls a quantum state of a single qubit. "X" and "Y' are multiple qubit gates that control quantum states of multiple qubits. "RY' is a single qubit gate having a parameter. Note that the quantum gate is not limited to "H", "Y", "X", and "RY', and there are various types of quantum gates.

For such a quantum circuit QC0, the quantum circuit simulator executes a quantum operation and simulates a final quantum state or a measurement result. The quantum operation here indicates a series of operations for causing the quantum gates to act on the qubits. The simulator that executes the quantum circuit includes a Decision Diagram (DD) based quantum circuit simulator. The DD-based one can sequentially apply the quantum gate (matrix) to act on a state vector (quantum state) and proceed calculation. Furthermore, the DD based can integrate the plurality of quantum gates (matrix) into one matrix.

When a type of the quantum gate or a parameter of the quantum gate in the quantum circuit changes even slightly, the quantum circuit simulator performs all the calculations of the quantum circuit again from the beginning. If the type of the quantum gate or the parameter of the quantum gate in the quantum circuit changes even slightly, the DD-based quantum circuit simulator that can calculate a matrix or a matrix product needs to recalculate all from the beginning. Then, a total time of the simulation increases.

Therefore, in the following embodiment, a method for reducing a simulation time of a quantum circuit simulator that can calculate a product of matrices will be described. Note that the quantum circuit simulator is not limited to the DD based, and it is sufficient that the quantum circuit simulator be the one that can calculate the product of the matrices.

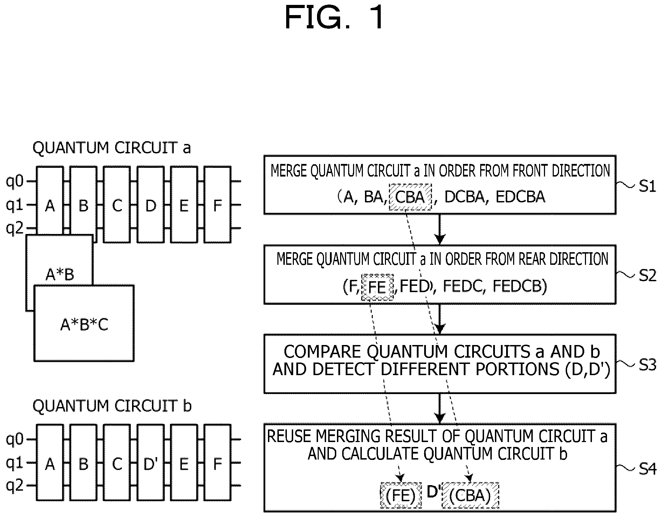

FIG. 1 is a diagram illustrating an operation principle of simulation processing according to the embodiment. A quantum circuit a illustrated in FIG. 1 includes a plurality of quantum gates A to F. Each of A to F is represented by a matrix. The quantum circuit a can integrate the quantum gates A to F into one matrix (FEDCBA).

First, when inputting information regarding the quantum circuit a, an information processing device merges the quantum gates included in the quantum circuit a expanded from the information in order from a front direction into a single matrix (S1). The term merge here means that a plurality of gates is represented as a single matrix or means a product of matrices. Here, the information processing device merges the quantum gates included in the quantum circuit a in order from the front direction as (A), (BA), (CBA), (DCBA), (EDCBA) ... and sets each quantum gate as a single matrix. Then, the information processing device saves a merging result.

Furthermore, the information processing device merges the quantum gates included in the quantum circuit a in order from a rear direction into a single matrix (S2). Here, the information processing device merges the quantum gates included in the quantum circuit a in order from the rear direction as (F), (FE), (FED), (FEDC), (FEDCB) ... and sets each quantum gate as a single matrix. Then, the information processing device saves a merging result.

Then, when inputting information regarding a quantum circuit b, the information processing device compares the quantum circuit a expanded from the information and the quantum circuit b and detects different portions (S3). Here, it is assumed that different portions be quantum gates D and D'.

Then, the information processing device reuses the merging result of the quantum circuit a and calculates (simulates) the quantum circuit b (S4). For example, the information processing device simulates the quantum circuit b using the merging result, for a portion having no difference before the detected different portion and a portion having no difference after the detected different portion. Here, it is assumed that the quantum circuit b be a matrix (FED'CBA). The detected different portion is D'. Therefore, the merging result (FE) is reused for a portion having no difference before D'. The merging result (CBA) is reused for a portion having no difference after D'. As a result, the quantum circuit b is calculated (simulated) as (FE) * D' * (CBA).

Therefore, the number of multiplication in a case where the merging result is reused is twice because the number of "*" indicating integration is two. On the other hand, the number of times of integration in a case where all calculations are performed again from the beginning is five times. As a result, by reusing the merged result, not performing all the calculations again from the beginning, the information processing device can accelerate the simulation of the quantum circuit simulator that can calculate the product of the matrices.

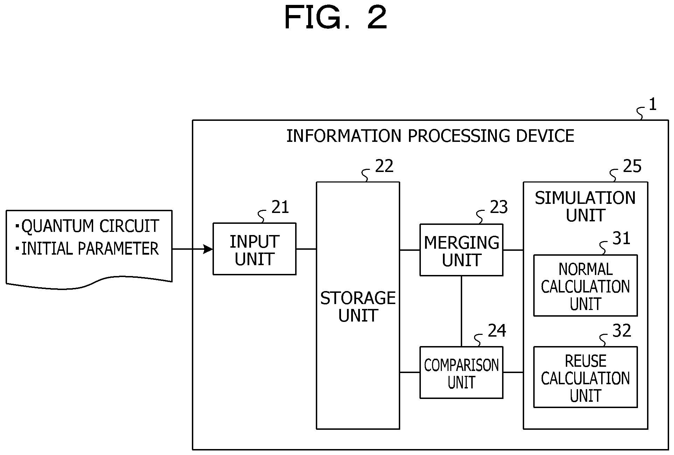

FIG. 2 is a diagram illustrating an example of a functional configuration of the information processing device according to the embodiment. An information processing device 1 illustrated in FIG. 2 merges and saves the quantum gates (matrix) from each of the front direction and the rear direction, for the plurality of quantum gates included in the quantum circuit and uses the merging result for calculation of simulation of a new quantum circuit. The calculation of the simulation of the quantum circuit here is executed by, for example, a DD-based quantum circuit simulator. However, the embodiment is not limited to this. Note that, in the embodiment, the quantum gate may be abbreviated as a gate.

The information processing device 1 includes an input unit 21, a storage unit 22, a merging unit 23, a comparison unit 24, and a simulation unit 25. The simulation unit 25 includes a normal calculation unit 31 and a reuse calculation unit 32.

The input unit 21 inputs information regarding the quantum circuit and an initial parameter and stores the information and the parameter in the storage unit 22. The information regarding the quantum circuit indicates a quantum circuit described in a system for describing a circuit. As an example of the system for describing the circuit, a Quantum Assembly Language (QASM) is exemplified. However, the system is not limited to this. Furthermore, the initial parameter indicates an initial parameter used for the gate included in the quantum circuit. This initial parameter is, for example, described in the information regarding the quantum circuit.

The storage unit 22 stores the information input by the input unit 21. Furthermore, the storage unit 22 stores information created by the merging unit 23 and the simulation unit 25.

The merging unit 23 merges the quantum circuit in order from the gate in the front direction and stores the merging result (matrix) obtained for each merging in the storage unit 22. Furthermore, the merging unit 23 merges the quantum circuit in order from the gate in the rear direction and stores the merging result (matrix) obtained for each merging in the storage unit 22.

The comparison unit 24 compares two quantum circuits to be compared and detects a different portion.

For example, in a case of a quantum circuit with a parameter, the comparison unit 24 checks whether or not the two quantum circuits to be compared are equivalent, excluding the parameter. As an example, the comparison unit 24 compares the two quantum circuits to be compared, using the description level of the gate described in the system for describing the quantum circuit and checks whether or not types of gates of the two quantum circuits are equivalent. In other words, the comparison unit 24 compares the two quantum circuits to be compared and detects a different portion between the types of the gates of the two quantum circuits. Note that, as an example of the system for describing the circuit here, the QASM is exemplified. However, the system is not limited to this.

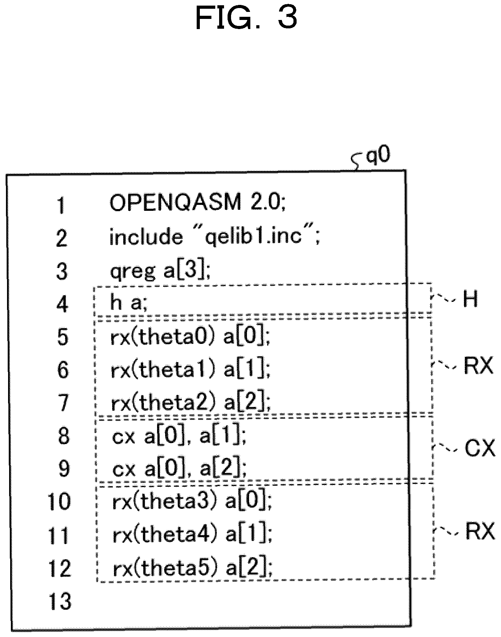

Here, a method for comparing the two quantum circuits to be compared, based on the description level of the gate described in the system for describing the quantum circuit will be described with reference to FIG. 3. FIG. 3 is a diagram illustrating an example of the comparison according to the embodiment. Note that, in FIG. 3, a case where the QASM is applied as an example of the system for describing the quantum circuit will be described. In FIG. 3, a description level q0 of a gate in which the quantum circuit is described by the QASM is illustrated. The description level q0 of the gate includes a symbol h. This means that three "H" quantum gates are caused to act on a including three qubits. Furthermore, three symbols of rx are included. This means three "RX" quantum gates. Furthermore, two symbols of cx are included. This means two "CX" quantum gates. Furthermore, three symbols of rx are included. This means three "RX" quantum gates.

In the description of the gate of the quantum circuit by such a system for describing the quantum circuit, if the type of the gate is the same, the same symbol is used. Therefore, the comparison unit 24 compares the description levels of the respective gates for the two quantum circuits to be compared and checks whether or not the types of the gates of the two quantum circuits are equivalent.

Returning to FIG. 2, as another example, the comparison unit 24 compares the two quantum circuits to be compared, based on a hash value obtained by inputting a vector representing a gate into a hash function and checks whether or not the two quantum circuits are equivalent. For example, when merging the gate of the quantum circuit, it is sufficient for the comparison unit 24 to detect a difference from a gate of a new quantum circuit, by calculating and saving the hash value of the gate for each merging result. As the hash function, for example, MD5 (128 bits), SHA-1 (160 bits), and SHA-256 (256 bits) are exemplified. However, the hash function is not limited to these. Note that, when the vector representing the gate is hashed, the parameter is excluded, and a difference in the parameter is not detected.

Furthermore, in a case of the quantum circuit with the parameter, when it is determined that the types of the quantum circuits are equivalent, except for the parameter, the comparison unit 24 checks whether or not the parameters are different. As an example, the comparison unit 24 compares parameters used for the gates with the parameter, for the two quantum circuits to be compared, using the description level of the gate described in the system for describing the quantum circuit and checks whether or not the parameters used for the gates of the two quantum circuits are equivalent. In other words, if the types of the gates of the two quantum circuits to be compared are exactly the same, the comparison unit 24 detects a different portion of the parameters used for the gates.

Note that, in a case where the quantum circuit is not the quantum circuit with the parameter, the comparison unit 24 compares the two quantum circuits to be compared, using the description level of the gate described in the system for describing the quantum circuit and checks whether or not the types of the gates of the two quantum circuits are equivalent. Alternatively, it is sufficient for the comparison unit 24 to compare the two quantum circuits to be compared for each gate in order from the front direction and the rear direction and to check which gates are equivalent and which gates are not equivalent.

The normal calculation unit 31 calculates (simulates) the quantum circuit as usual. For example, the normal calculation unit 31 performs the calculation of the quantum circuit in order from a first gate. As an example, the normal calculation unit 31 calculates quantum calculation of a quantum circuit to be merged as usual. Furthermore, in a case where the merging result is not used even in a case of the new quantum circuit, the normal calculation unit 31 calculates quantum calculation of the new quantum circuit as usual.

The reuse calculation unit 32 reuses the merging result and calculates (simulates) the quantum circuit. For example, when calculating the new quantum circuit, in a case where the merging result is used, the reuse calculation unit 32 performs calculation as follows. That is, the reuse calculation unit 32 reuses the merging result (matrix) obtained by performing merging from the gate in the front direction, for a portion with no difference before a different portion (gate) detected by the comparison unit 24. Furthermore, the reuse calculation unit 32 reuses the merging result (matrix) obtained by performing merging from the gate in the rear direction, for a portion with no difference after the different portion (gate) detected by the comparison unit 24. Then, the reuse calculation unit 32 reuses the merging result and calculates the new quantum circuit.

Here, it is sufficient to determine whether or not to use the merging result, for example, as follows. As a first example, in a case where the number of gates having a difference for the two quantum circuits to be compared is smaller than a predetermined number, the reuse calculation unit 32 uses the merging result for the calculation of the new quantum circuit. The predetermined number here is three as an example. However, the predetermined number may be two or one and is not limited to these. However, if the predetermined number is larger than a certain number, it is not possible to efficiently use the merging result. Therefore, it is sufficient to appropriately determine the certain number with which the merging result can be efficiently used.

Furthermore, as a second example, the reuse calculation unit 32 uses the number of gates included in the merging result to be used, and in a case where the number of the gates/the total number of gates of the quantum circuit is larger than a predetermined ratio, the reuse calculation unit 32 uses the merging result for the calculation of the new quantum circuit. The predetermined ratio here is 0.2 as an example. However, the predetermined ratio is not limited to this. This is because, if the number of gates included in the merging result to be used is less than the certain number, a calculation time does not change so much regardless of whether or not the merging result is used. Therefore, it is sufficient to determine the predetermined ratio in consideration of the calculation times in a case where the merging result is used and in a case where the merging result is not used.

Furthermore, the reuse calculation unit 32 may determine whether or not to use the merging result, using both of the determination described in the first example and the determination described in the second example.

### (Example of Merging)

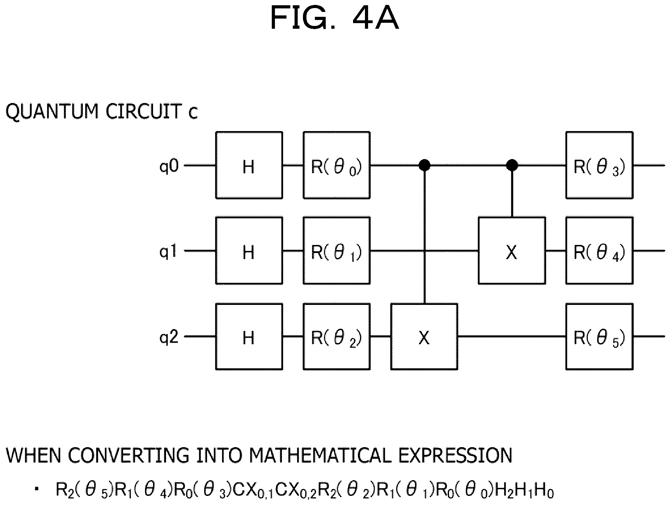

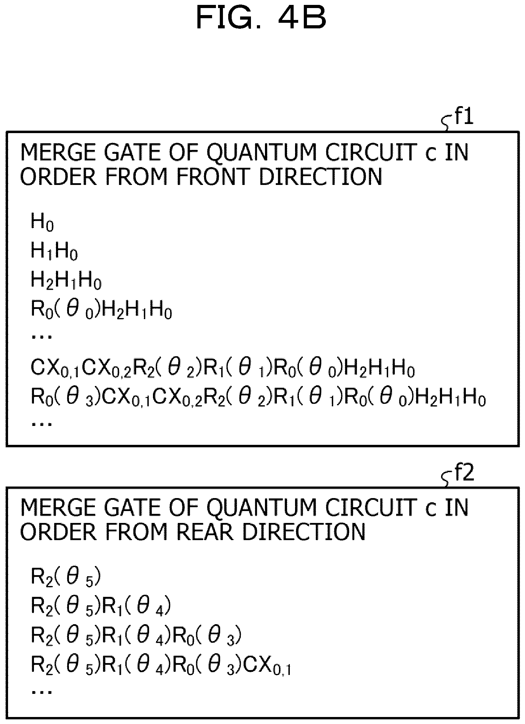

Here, an example of merging according to the embodiment will be described with reference to FIGs. 4A and 4B. FIGs. 4A and 4B are diagrams illustrating an example of the merging according to the embodiment.

In FIG. 4A, a quantum circuit c to be simulated is illustrated. In the quantum circuit c, the qubits are three bits of "q0", "q1", and "q2". "H", "R", and "X" indicate the gates. "R" is the gate having the parameter, and "θ₀", "θ₁", "θ₂", "θ₃", "θ₄", and "θ₅" are set as the parameters. That is, the quantum circuit c is the quantum circuit having the parameter.

The quantum circuit c can be converted into a mathematical expression that expresses each gate as a matrix. The converted mathematical expression of the quantum circuit c is expressed as the following formula (1). Note that "CX" corresponds to a box-and-whisker-like "X". Numbers on a lower right side of R, CX, and H respectively correspond to qubits acted by the gates of R, CX, and H. "0" corresponds to q0, "1" corresponds to q1, and "2" corresponds to q2. R₂ (θ₅) R₁ (θ₄) R₀ (θ₃) CX_{0,1}CX_{0,2}R₂ (θ₂) R₁ (θ₁) R₀ (θ₀) H₂H₁H₀ ... Expression (1).

Then, the normal calculation unit 31 calculates quantum calculation of the quantum circuit c based on the formula (1). That is, the normal calculation unit 31 calculates the quantum calculation of the quantum circuit c as usual.

As indicated by a reference f1 in FIG. 4B, the merging unit 23 merges the quantum circuit c in order from the gate in the front direction. Here, the merging unit 23 merges the quantum circuit c in order from the gate in the front direction, as "H₀", "H₁H₀", "H₂H₁H₀", "R₀ (θ₀) H₂H₁H₀", .... Then, the merging unit 23 stores a front direction merging group indicating the merged result in the storage unit 22.

Furthermore, as indicated by a reference f2 in FIG. 4B, the merging unit 23 merges the quantum circuit c in order from the gate in the rear direction. Here, the merging unit 23 merges the quantum circuit c in order from the gate in the rear direction, as "R₂ (θ₅)", "R₂ (θ₅) R₁ (θ₄)", "R₂ (θ₅) R₁ (θ₄) R₀ (θ₃)", "R₂ (θ₅) R₁ (θ₄) R₀ (θ₃) CX_{0,1}", .... Then, the merging unit 23 stores a rear direction merging group indicating the merged result in the storage unit 22.

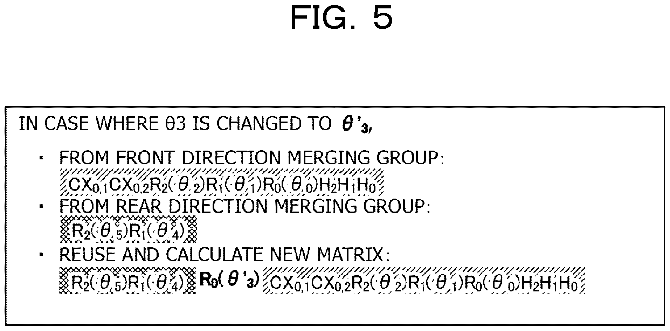

Under such a circumstance, the reuse calculation unit 32 calculates a quantum circuit c' that is a new simulation target, by reusing the merging result of the quantum circuit c. FIG. 5 is a diagram illustrating an example of reuse calculation according to the embodiment. In FIG. 5, it is assumed that the input unit 21 input information regarding the quantum circuit c' that is the new simulation target. Then, the comparison unit 24 compares the quantum circuits c and c' and checks whether or not types of gates of the quantum circuits c and c' are equivalent. Then, when it is determined that the types of the gates of the quantum circuits c and c' are equivalent, the comparison unit 24 checks whether or not parameters are different. Here, it is assumed that, although the types of the gates of the quantum circuits c and c' are equivalent, it be determined that parameters of gates R₀ are different. That is, it is assumed that the parameter of the gate R₀ of the quantum circuit c be θ₃ and the parameter of the gate R₀ of the quantum circuit c' be changed to θ₃'.

Then, as illustrated in FIG. 5, the reuse calculation unit 32 reuses the front direction merging group obtained by performing merging from the gate in the front direction, for a portion with no difference before the gate R₀ of which the parameter θ₃ has been changed. Here, the reuse calculation unit 32 reuses a matrix product of "CX_{0,1}CX_{0,2}R₂ (θ₂) R₁ (θ₁) R₀ (θ₀) H₂H₁H₀" before R₀ (θ₃) from the front direction merging group (refer to reference f1 in FIG. 4B). Furthermore, the reuse calculation unit 32 reuses a matrix product of "R₂ (θ₅)R₁ (θ₄)" after R₀ (θ₃) from the rear direction merging group (refer to reference f2 in FIG. 4B). Then, the reuse calculation unit 32 calculates a matrix of R₂ (θ₅) R₁ (θ₄) R₀ (θ'₃) CX_{0,1}CX_{0,2}R₂ (θ₂) R₁ (θ₁) R₀ (θ₀) H₂H₁H₀, as the calculation of the quantum circuit c'.

As a result, by using the merging result for the calculation of the new quantum circuit, the information processing device 1 can shorten the simulation time of the quantum circuit simulator that can calculate a matrix or a matrix product. Specifically, while the number of times of integrations in a case where the merging result is reused is two, the number of times of integrations in a case where all the calculations are performed again from the beginning is 10. Therefore, the information processing device 1 can accelerate the simulation of the quantum circuit simulator that can calculate the matrix or the matrix product, by reusing the merging result, not performing all the calculations again from the beginning.

### (Example of Use of Merging Result)

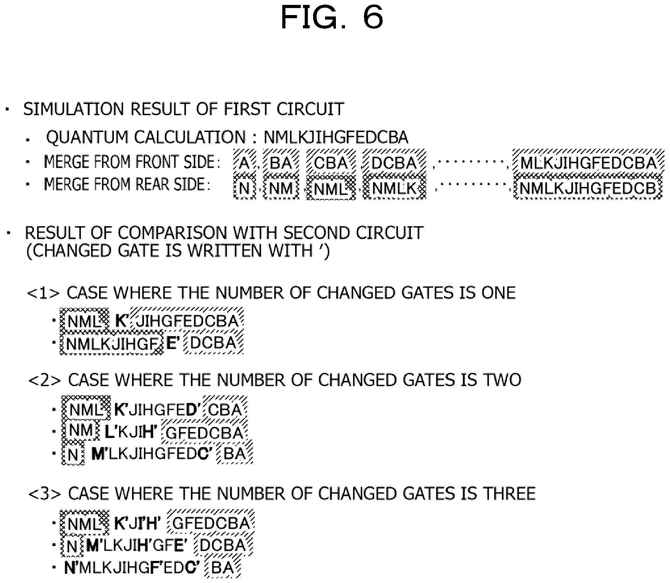

FIG. 6 is a diagram illustrating an example of use of the merging result. In FIG. 6, a simulation result of a first quantum circuit is illustrated. Quantum calculation of the quantum circuit is calculated by a mathematical expression "NMLKJIHGFEDCBA". Each alphabet is a matrix corresponding to each gate. Results of merging the quantum circuit in order from the front direction are represented as A, BA, CBA, DCBA, .... Furthermore, results of merging the quantum circuit in order from the rear direction are represented as N, NM, NML, NMLK, ....

Under such a circumstance, when a second quantum circuit is calculated, as a result of comparing the first quantum circuit and the second quantum circuit, a changed gate is detected. A gate with dash (`) is the changed gate. When the second quantum circuit is calculated, the reuse calculation unit 32 performs quantum calculation using the merging result of the first quantum circuit.
<1> illustrated in FIG. 6 is quantum calculation in a case where the number of changed gates is one. As an example, a first row is a case where the changed gate is K'. In such a case, when calculating the second quantum circuit, the reuse calculation unit 32 performs quantum calculation using a result "JIHGFEDCBA" of merging from the front direction for a portion with no difference before the changed gate K' and using a result "NML" of merging from the rear direction for a portion with no difference after the changed gate K'.
   Furthermore, as another example, a second row is a case where the changed gate is E'. In such a case, when calculating the second quantum circuit, the reuse calculation unit 32 performs quantum calculation using a result "DCBA" of merging from the front direction for a portion with no difference before the changed gate E' and using a result "NMLKJIHGF" of merging from the rear direction for a portion with no difference after the changed gate E'.
<2> illustrated in FIG. 6 is a case where the number of changed gates is two. As an example, a first row is a case where the changed gates are K' and D'. In such a case, when calculating the second quantum circuit, the reuse calculation unit 32 performs quantum calculation using a result "CBA" of merging from the front direction for a portion with no difference before the changed gate D' and using a result "NML" of merging from the rear direction for a portion with no difference after the changed gate K'.

Furthermore, as another example, a second row is a case where the changed gates are L' and H'. In such a case, when calculating the second quantum circuit, the reuse calculation unit 32 performs quantum calculation using a result "GFEDCBA" of merging from the front direction for a portion with no difference before the changed gate H' and using a result "NM" of merging from the rear direction for a portion with no difference after the changed gate L'.

Furthermore, as still another example, a third row is a case where the changed gates are M' and C'. In such a case, when calculating the second quantum circuit, the reuse calculation unit 32 performs quantum calculation using a result "BA" of merging from the front direction for a portion with no difference before the changed gate C' and using a result "N" of merging from the rear direction for a portion with no difference after the changed gate M'.

<3> illustrated in FIG. 6 is a case where the number of changed gates is three. As an example, a first row is a case where the changed gates are K', I', and H'. In such a case, when calculating the second quantum circuit, the reuse calculation unit 32 performs quantum calculation using a result "GFEDCBA" of merging from the front direction for a portion with no difference before the changed gate H' and using a result "NML" of merging from the rear direction for a portion with no difference after the changed gate K'.

Furthermore, as another example, a second row is a case where the changed gates are M', H', and E'. In such a case, when calculating the second quantum circuit, the reuse calculation unit 32 performs quantum calculation using a result "DCBA" of merging from the front direction for a portion with no difference before the changed gate E' and using a result "N" of merging from the rear direction for a portion with no difference after the changed gate M'.

Furthermore, as still another example, a third row is a case where the changed gates are N', F', and C'. In such a case, when calculating the second quantum circuit, the reuse calculation unit 32 performs quantum calculation using a result "BA" of merging from the front direction for a portion with no difference before the changed gate C'. However, since there is no portion having with no difference after the changed gate N, the reuse calculation unit 32 does not use the merged result.

Note that, regarding the determination whether or not to use the merging result in a case where the number of changed gates is three, for example, in a case of the first example and in a case where the predetermined number is set to "3", the reuse calculation unit 32 does not use the merging result. That is, the reuse calculation unit 32 determines whether or not the number of gates having a difference between the two quantum circuits to be compared is smaller than "3". Then, in a case where the number of gates having the difference between the two quantum circuits to be compared is smaller than "3", the reuse calculation unit 32 uses the merging result for the calculation of the new quantum circuit. On the other hand, in a case where the number of gates having the difference is equal to or more than "3", the reuse calculation unit 32 does not use the merging result for the calculation of the new quantum circuit. Here, in a case where the number of changed gates is three, the number of gates having the difference between the two quantum circuits to be compared is equal to or more than "3". Therefore, the reuse calculation unit 32 does not use the merging result for the calculation of the second quantum circuit.

Furthermore, regarding the determination whether or not to use the merging result in a case of the third row where the number of changed gates is three, for example, in a case of the second example and in a case where the predetermined ratio is set to "0.2", the reuse calculation unit 32 does not use the merging result. That is, the reuse calculation unit 32 determines whether or not the number of the gates/the total number of gates of the quantum circuit is larger than "0.2", using the number of gates included in the used merging result. Then, in a case where the number of gates included in the used merging result/the total number of gates of the quantum circuit is larger than "0.2", the reuse calculation unit 32 uses the merging result for the calculation of the new quantum circuit. On the other hand, in a case where the number of gates included in the used merging result/the total number of gates of the quantum circuit is equal to or less than "0.2", the reuse calculation unit 32 does not use the merging result for the calculation of the new quantum circuit. Here, in a case where of the third row where the number of changed gates is three, the number of gates included in the used merging result is "2", the total number of gates of the quantum circuit is "14", and the number of gates included in the used merging result/the total number of gates of the quantum circuit is "0.14" and is equal to or less than "0.2". Therefore, the reuse calculation unit 32 does not use the merging result for the calculation of the second quantum circuit.

### (Flowchart of Simulation Processing)

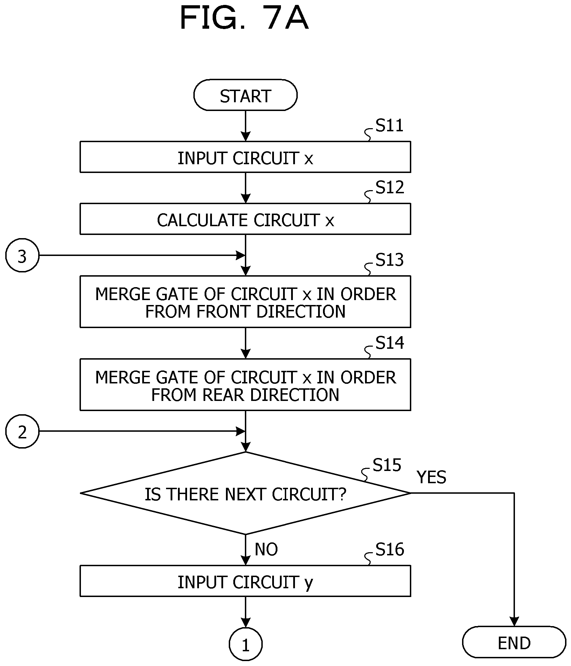

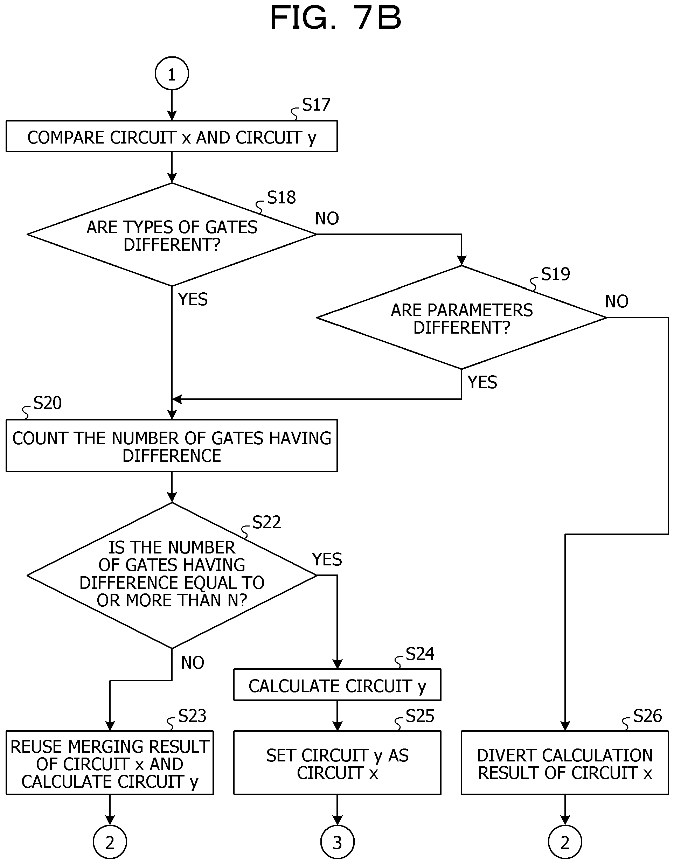

Here, a flowchart of simulation processing executed by the information processing device 1 will be described with reference to FIG. 7. FIG. 7 (i.e., FIGs. 7A and 7B) is a diagram illustrating an example of the flowchart of the simulation processing according to the embodiment. As illustrated in FIG. 7, the information processing device 1 inputs information regarding a quantum circuit x (step S11). Then, the information processing device 1 calculates (simulates) the quantum circuit x, of which the input information is expanded, as usual (step S12).

Subsequently, the information processing device 1 merges gates of the quantum circuit x in order from the front direction (step S13). The information processing device 1 merges the gates of the quantum circuit x in order from the rear direction (step S14).

Then, the information processing device 1 determines whether or not there is a next quantum circuit (step S15). In a case where it is determined that there is the next quantum circuit (step S15; Yes), the information processing device 1 inputs information regarding a next quantum circuit y (step S16).

Then, the information processing device 1 compares the quantum circuit x and the quantum circuit y of which the input information is expanded (step S17). For example, the information processing device 1 compares the quantum circuit x and the quantum circuit y, using the description level of the gate described in the system for describing the quantum circuit. Then, the information processing device 1 determines whether or not the types of the gates are different (step S18). For example, the information processing device 1 checks whether or not types of gates of the quantum circuit x and the quantum circuit y are equivalent, using the description level of the gate described in the system for describing the quantum circuit. In a case where it is determined that the types of the gates are different (step S18; Yes), the information processing device 1 proceeds to step S20.

On the other hand, in a case where it is determined that the types of the gates are not different (step S18; No), the information processing device 1 determines whether or not parameters are different (step S19). For example, the information processing device 1 compares parameters used for the gates of the quantum circuit x and the quantum circuit y, using the description level of the gate described in the system for describing the quantum circuit and checks whether or not the parameters used for the gates of the quantum circuit x and the quantum circuit y are equivalent. In a case where it is determined that the parameters are different (step S19; Yes), the information processing device 1 proceeds to step S20.

In step S20, the information processing device 1 counts the number of gates having a difference (step S20). For example, the information processing device 1 counts the number of gates having a difference between the quantum circuit x and the quantum circuit y, using the description level of the gate described in the system for describing the quantum circuit. Then, the information processing device 1 determines whether or not the number of gates having the difference is equal to or more than N (step S22).

In a case where it is determined that the number of gates having the difference is less than N (step S22; No), the information processing device 1 reuses the merging result of the quantum circuit x and calculates (simulates) the quantum circuit y (step S23). For example, the information processing device 1 reuses a matrix obtained by merging from the gate in the front direction, for a portion with no difference before the gate having the difference. Furthermore, the information processing device 1 reuses a matrix obtained by merging from the gate in the rear difference, for a portion with no difference after the gate having the difference. Then, the information processing device 1 proceeds to step S15 so as to calculate the next quantum circuit.

On the other hand, in a case where it is determined that the number of gates having the difference is equal to or more than N (step S22; Yes), the information processing device 1 calculates (simulates) the quantum circuit y as usual (step S24). Then, the information processing device 1 sets the quantum circuit y as the quantum circuit x (step S25). Then, the information processing device 1 proceeds to step S13 so as to merge the gate of the quantum circuit x.

In a case where it is determined in step S19 that the parameters are not different (step S19; No), the information processing device 1 diverts the calculation result of the quantum circuit x as the calculation of the quantum circuit y (step S26). Then, the information processing device 1 proceeds to step S15 so as to calculate the next quantum circuit.

Then, in a case where the information processing device 1 determines in step S15 that there is no next quantum circuit (step S15; No), the information processing device 1 ends the simulation processing.

Note that the simulation processing described in the embodiment may be applied to a Variational Quantum Algorithm (Variational Quantum Algorithm: VQA). The VQA searches for a combination of parameters that optimizes an evaluation function, while gradually moving a value of the parameter used for the gate included in the quantum circuit, with respect to a result obtained by the calculation of the quantum circuit. The parameter indicates, for example, θ of the gate R included in the quantum circuit c illustrated in FIG. 4A. In a case where the simulation processing is applied to the VQA, for example, it is sufficient for the comparison unit 24 to check whether or not the parameters are different, without determining whether or not the types of the quantum circuits are equivalent, for the two quantum circuits to be compared. That is, it is sufficient for the comparison unit 24 to detect a different portion between the parameters, for the two quantum circuits to be compared. Then, when calculating the changed quantum circuit, it is sufficient for the reuse calculation unit 32 to reuse the merging result (matrix) of the quantum circuit before the change, for a portion with no difference before the gate using the detected parameter and a portion with no difference after the gate using the detected parameter.

### [Effects of Embodiment]

According to the above embodiment, the information processing device 1 simulates the quantum circuit using the simulator that can calculate a product of matrices. The information processing device 1 merges a first quantum circuit in order from a gate in a first direction and saves a matrix obtained for each merging. The information processing device 1 merges the first quantum circuit in order from a gate in a second direction and saves a matrix obtained for each merging. Then, when simulating a second quantum circuit using the simulator, the information processing device 1 simulates the second quantum circuit, using a matrix obtained by merging, for a second gate that is a gate included in the second quantum circuit, arranged in the first direction or the second direction than a first gate that has a difference from the first quantum circuit, and has no difference from the first quantum circuit. As a result, the information processing device 1 can reduce the simulation time of the quantum circuit simulator that can calculate the matrix.

Furthermore, according to the above embodiment, the information processing device 1 compares the first quantum circuit and the second quantum circuit and detects the first gate that has a difference from the first quantum circuit, from among the gates included in the second quantum circuit. As a result, by detecting the gate having the difference, the information processing device 1 can reuse calculation of a portion with no difference before and after the detected gate.

Furthermore, according to the above embodiment, the information processing device 1 detects the first gate having the difference from the first quantum circuit from among the gates included in the second quantum circuit, using the description level of the gate described in the system for describing the quantum circuit. As a result, the information processing device 1 can easily detect the gate having the difference, using the system for describing the circuit.

Furthermore, according to the above embodiment, the information processing device 1 detects the first gate having the difference from the first quantum circuit from among the gates included in the second quantum circuit, using the hash value obtained by inputting the vector representing the gate into the hash function. As a result, the information processing device 1 can easily detect the gate having the difference, by using the hash value obtained by hashing the quantum circuit.

Furthermore, according to the above embodiment, in a case where the gate having the difference is not detected, the information processing device 1 detects the first gate having the difference from the first quantum circuit from among the gates included in the second quantum circuit, based on a difference between the parameters used for the gates, described in the system for describing the quantum circuit. As a result, the information processing device 1 can easily detect the gate having the different parameter, by using the system for describing the circuit.

Furthermore, according to the above embodiment, the simulation of the quantum circuit includes simulation with the variational quantum algorithm (VQA) for searching for the combination of the parameters that optimizes the evaluation function, while gradually moving the value of the parameter used for the gate included in the quantum circuit. As a result, the information processing device 1 can reduce the simulation time of the quantum circuit simulator that can calculate the matrix, in the simulation with the VQA.

Note that each illustrated component of the information processing device 1 does not necessarily have to be physically configured as illustrated in the drawings. That is, specific aspects of separation and integration of the information processing device 1 are not limited to the illustrated ones, and all or a part thereof can be functionally or physically separated and integrated in an arbitrary unit according to various loads, use states, or the like. Furthermore, the storage unit 22 may be coupled through a network as an external device of the information processing device 1.

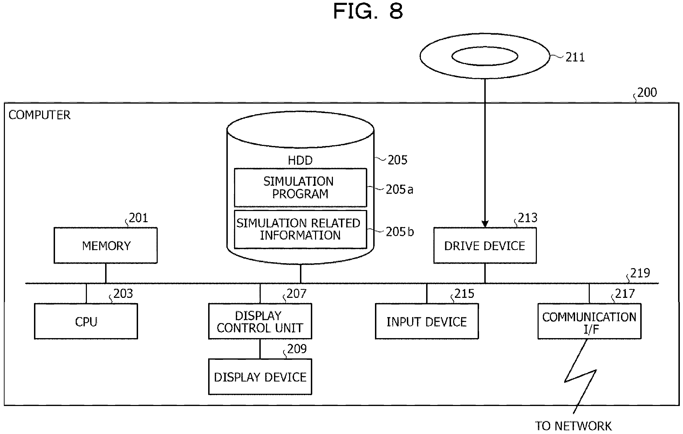

Furthermore, various types of processing described in the above embodiment can be achieved by a computer such as a personal computer or a work station executing programs prepared in advance. Therefore, hereinafter, an example of a computer that executes a simulation program that realizes functions similar to those of the information processing device 1 illustrated in FIG. 2 will be described. Here, the simulation program that realizes the functions similar to those of the information processing device 1 will be described as an example. FIG. 8 is a diagram illustrating an example of the computer that executes the simulation program.

As illustrated in FIG. 8, a computer 200 includes a Central Processing Unit (CPU) 203 that executes various types of arithmetic processing,
an input device 215 that receives input of data from a user, and a display device 209. Furthermore, the computer 200 includes a drive device 213 that reads a program and the like from a storage medium, and a communication Interface (I/F) 217 that exchanges data with another computer via a network. Furthermore, the computer 200 includes a memory 201 that temporarily stores various types of information, and a Hard Disk Drive (HDD) 205. Then, the memory 201, the CPU 203, the HDD 205, a display control unit 207, the display device 209, the drive device 213, the input device 215, and the communication I/F 217 are coupled by a bus 219.

The drive device 213 is, for example, a device for a removable disk 211. The HDD 205 stores a simulation program 205a and simulation processing related information 205b. The communication I/F 217 manages an interface between the network and the inside of the device, and controls input and output of data to and from another computer. As the communication I/F 217, for example, a modem, a local area network (LAN) adapter, or the like may be adopted.

The display device 209 is a display device that displays data such as a document, an image, or functional information, as well as a cursor, an icon, or a tool box. As the display device 209, for example, a liquid crystal display, an organic electroluminescence (EL) display, or the like may be adopted.

The CPU 203 reads the simulation program 205a, loads the simulation program 205a into the memory 201, and executes the simulation program 205a as a process. Such a process corresponds to each functional unit of the information processing device 1. For example, information stored in the storage unit 22 is included in the simulation processing related information 205b. Then, for example, the removable disk 211 stores each piece of information such as the simulation program 205a.

Note that the simulation program 205a does not necessarily have to be stored in the HDD 205 from the beginning. For example, the program is stored in a "portable physical medium" such as a flexible disk (FD), a compact disc (CD)-read only memory (ROM), a digital versatile disc (DVD) disk, a magneto-optical disk, or an integrated circuit (IC) card inserted in the computer 200. Then, the computer 200 may read the simulation program 205a from these media and execute the read program.

Furthermore, the processing executed by the information processing device 1 described in the above embodiment can be applied to quantum simulation for calculating a quantum state in a quantum circuit using the DD-based quantum circuit simulator, for example.

## Claims

1. A simulation program of simulating a quantum circuit by using a simulator that is capable of calculating a product of matrices, the simulation program comprising instructions which, when executed by a computer, cause the computer to execute processing comprising:
performing, in order from a gate in a first direction among a plurality of gates included in a first quantum circuit, for each gate of the plurality of gates, a merging of the each gate in the first direction, and to store a plurality of first matrices obtained by the merging in the first direction;
performing, in order from a gate in a second direction among the plurality of gates, for each gate of the plurality of gates, a merging of the each gate in the second direction, and to store a plurality of second matrices obtained by the merging in the second direction; and
performing simulation of a second quantum circuit by using the plurality of first or second matrices, for a second gate that is a gate among multiple gates included in the second quantum circuit, has no difference from the first quantum circuit, and is arranged in the first or second direction than a first gate that is a gate in the second quantum circuit and has a difference from the first quantum circuit.

2. The simulation program according to claim 1, the processing further comprising:
comparing the plurality of gates in the first quantum circuit and the multiple gates in the second quantum circuit, and
detecting, from among the multiple gates included in the second quantum circuit, the first gate that has the difference from the first quantum circuit.

3. The simulation program according to claim 2, wherein
the detecting includes detecting the first gate by using a description level of a gate described in a system that describes a quantum circuit.

4. The simulation program according to claim 2, wherein
the detecting includes detecting the first gate by using a hash value obtained by inputting a vector that represents a gate into a hash function.

5. The simulation program according to claim 2, wherein
the detecting includes detecting the first gate, based on a difference between values of parameters used for gates, described in the system, in a case where the first gate that has the difference is not detected.

6. The simulation program according to claim 1, wherein
the simulation of the quantum circuit includes simulation with a Variational Quantum Algorithm (VQA) configured to search for a combination of parameters that optimizes an evaluation function, while gradually moving a value of a parameter used for the gate included in the quantum circuit.

7. An information processing apparatus of simulating a quantum circuit by using a simulator that is capable of calculating a product of matrices, the information processing apparatus comprising:
a first merging unit configured to perform, in order from a gate in a first direction among a plurality of gates included in a first quantum circuit, for each gate of the plurality of gates, a merging of the each gate in the first direction, and to store a plurality of first matrices obtained by the merging in the first direction;
a second merging unit configured to perform, in order from a gate in a second direction among the plurality of gates, for each gate of the plurality of gates, a merging of the each gate in the second direction, and to store a plurality of second matrices obtained by the merging in the second direction; and
a simulation unit configured to perform simulation of a second quantum circuit by using the plurality of first or second matrices, for a second gate that is a gate among a plurality of gates included in the second quantum circuit, has no difference from the first quantum circuit, and is arranged in the first or second direction than a first gate that is a gate in the second quantum circuit and has a difference from the first quantum circuit.

8. A simulation method implemented by a computer of simulating a quantum circuit by using a simulator that is capable of calculating a product of matrices, the method comprising:
performing, in order from a gate in a first direction among a plurality of gates included in a first quantum circuit, for each gate of the plurality of gates, a merging of the each gate in the first direction, and to store a plurality of first matrices obtained by the merging in the first direction;
performing, in order from a gate in a second direction among the plurality of gates, for each gate of the plurality of gates, a merging of the each gate in the second direction, and to store a plurality of second matrices obtained by the merging in the second direction; and
performing simulation of a second quantum circuit by using the plurality of first or second matrices, for a second gate that is a gate among a plurality of gates included in the second quantum circuit, has no difference from the first quantum circuit, and is arranged in the first or second direction than a first gate that is a gate in the second quantum circuit and has a difference from the first quantum circuit.
